# EUROPÄISCHE PATENTSCHRIFT

(11) **EP 3 277 628 B1**
(45) Veröffentlichungstag und Bekanntmachung des Hinweises auf die Patenterteilung: **08.05.2019**
(21) Anmeldenummer: 16710197.1
(22) Anmeldetag: 16.03.2016
(51) Int. Cl.: C01B 33/107, B01J 8/18, B01J 19/02

(54) **WIRBELSCHICHTREAKTOR ZUR HERSTELLUNG VON CHLORSILANEN**
FLUIDIZED BED REACTOR FOR PREPARING CHLOROSILANES
RÉACTEUR À LIT FLUIDISÉ UTILISÉ POUR PRODUIRE DES CHLOROSILANES

(30) Priorität: 30.03.2015 DE 102015205727
(43) Veröffentlichungstag der Anmeldung: 07.02.2018
(73) Patentinhaber: Wacker Chemie AG, 81737 München (DE)
(72) Erfinder: BABL, Maximilian, 84533 Marktl (DE); LIEBISCHER, Sebastian, 84453 Mühldorf (DE)
(74) Vertreter: Belz, Ferdinand
(86) Internationale Anmeldenummer: PCT/EP2016/055723
(87) Internationale Veröffentlichungsnummer: WO 2016/156047

(56) Entgegenhaltungen:
- WO-A1-02/49754
- WO-A1-2013/062676
- WO-A1-2014/009625
- DE-A1- 3 739 578
- US-A- 3 645 700

## Beschreibung

Gegenstand der Erfindung ist ein Wirbelschichtreaktor zur Herstellung von Chlorsilanen.

Die Herstellung von polykristallinem Silicium, welches z.B. in der Photovoltaik oder in der Halbleiter-Industrie Verwendung findet, geht vom Rohstoff Trichlorsilan (TCS) aus.

Dieses TCS wird hauptsächlich über drei verschiedene Verfahren erzeugt.

A) Si + 3 HCl → SiHCl₃ + H₂ + Nebenprodukte

B) Si + 3 SiCl₄ + 2 H₂ → 4 SiHCl₃ + Nebenprodukte

C) SiCl₄ + H₂ → SiHCl₃ + HCl + Nebenprodukte

Die Herstellung von Trichlorsilan gemäß A) und B) erfolgt in einem Wirbelschichtreaktor. Um hochreines Trichlorsilan zu erzeugen, erfolgt anschließend eine Destillation.

US 4092446 A offenbart einen Reaktor, in dem ein Siliciumbett, bestehend aus Siliciumpartikeln, mit Chlorwasserstoff durchströmt wird. Der Chlorwasserstoff reagiert mit den Siliciumpartikeln zu Siliciumtetrachlorid (STC) und TCS und Wasserstoff.

Ebenso ist es bekannt, STC zu TCS zu hydrieren. Dies erfolgt durch Reaktion von STC mit Wasserstoff in TCS und Chlorwasserstoff. Die Konvertierung von Siliciumtetrachlorid mit Wasserstoff zu Trichlorsilan findet üblicherweise in einem Reaktor bei hohen Temperaturen statt, bei wenigstens 600°C, idealerweise bei wenigstens 850°C (Hochtemperaturkonvertierung).

DE 196 54 154 A1 offenbart ein Verfahren zur Herstellung von Trichlorsilan, dadurch gekennzeichnet, dass man Siliciumteilchen, Tetrachlorsilan und Wasserstoff in Gegenwart eines zugesetzten Katalysators, der Kupfersilicid enthält, bei einer Temperatur von 400 bis 700°C in einem Wirbelschichtbett umsetzt.

US 2009/0060818 A1 beansprucht beispielsweise ein Verfahren zur Herstellung von TCS durch Umsetzung von Silicium mit HCl, oder STC mit Wasserstoff in Gegenwart von Silicium und Katalysatoren. Als Katalysator werden z.B. Fe, Cu, Al, V, Sb oder ihre Verbindungen verwendet. Silicium und Katalysatoren werden vor der Reaktion miteinander laminiert und zerkleinert.

Die größte Menge an STC fällt bei der Abscheidung von polykristallinem Silicium an. Polykristallines Silicium wird beispielweise mittels des Siemens-Prozesses erzeugt. Dabei wird Silicium in einem Reaktor an erhitzten Dünnstäben abgeschieden. Als Prozessgas wird als Silicium enthaltende Komponente ein Halogensilan wie TCS in Anwesenheit von Wasserstoff verwendet. Dadurch ist es möglich, aus dem bei der Abscheidung entstehenden Nebenprodukt STC TCS zu erzeugen und jenes TCS wieder dem Abscheideprozess zuzuführen, um elementares Silicium zu erzeugen.

Es ist bekannt, dass die Wandungen der Wirbelschichtreaktoren bei der Herstellung von TCS durch die wirbelnden Siliciumpartikel stark abrasiv beansprucht werden. Das gemahlene Silizium besitzt eine hohe Härte und führt somit für Abrasion der metallischen Bestandteile des Reaktors. Besonders die Wandung des Reaktors wird angegriffen. Diese Abrasion führt zu einer maximalen Reaktorlaufzeit von 36 Wochen. Danach muss das Reaktor-Mittelteil aufwändig repariert werden. Nach ca. 4 Fahrperioden ist das Reaktorteil Schrott und muss durch ein neues ersetzt werden.

WO 2014/009625 A1 und WO 2013/062676 A1 beschreiben einen Crack-Reaktor bzw. einen Steigrohrreaktor, die jeweils mit einer Korrosionsschutzschicht aus Zement versehen sind. Die Zementschicht wird jeweils auf eine wabenförmige, metallische Verankerungsstruktur aufgebracht.

DE 36 40 172 C1 offenbart einen Reaktor aus nickelhaltigem Werkstoff zur Umsetzung von körnigem Si-metallhaltigem Material in einem Fluidbett unter Bildung von Chlorsilanen, dadurch gekennzeichnet, dass bei einem Reaktor zur Umsetzung von körnigem Si-metallhaltigem Material mit Chlorwasserstoff der Werkstoff, der mit dem fluidisierten Si-metallhaltigen Material in Berührung kommt, einen Nickelgehalt von mindestens 40 Gew.-%, insbesondere über 98 Gew.-%, aufweist, wobei dieser bei Nickelgehalten bis 95 Gew.- zusätzlich zu den weiteren Werkstoff-Bestandteilen Titan in Mengen zwischen 0,5 und 4 Gew.-% enthält.
Der Reaktor ist ganz oder teilweise aus einem Werkstoff gefertigt, der dem Abrieb-Verschleiß durch das wirbelnde Si-metallhaltige Material auf Dauer standhält.

WO 2008/088465 A1 offenbart abrasionsbeständige Werkstoffe für Wirbelschichtreaktoren. Die Wärmetauscher werden dazu zumindest teilweise mit einer Beschichtung versehen, die Hartmetallpartikel wie Wolframcarbid, die in einer Matrix verteilt sind, umfasst. Die Hartmetallschicht ist metallurgisch an die Wärmetauscherfläche gebunden.

Die Auskleidungen und Beschichtungen mit Nickel oder Hartmetallpartikeln sind allerdings relativ teuer. Auch eine komplette Auskleidung mit Siliciumkarbid (SiC) wäre zu kostspielig. Bei größeren Bauteilen wäre zudem eine SiC-Auskleidung technisch kaum zu realisieren.

Aus der beschriebenen Problematik ergab sich die Aufgabenstellung der Erfindung. Insbesondere bestand die Aufgabe darin, alternative und kostengünstigere abrasionsbeständige Werkstoffe zur Auskleidung von Wirbelschichtreaktoren ausfindig zu machen

Die Aufgabe der Erfindung wird gelöst durch einen Wirbelschichtreaktor zur Herstellung von Chlorsilanen, umfassend einen Reaktormantel aus Stahl, dadurch gekennzeichnet, dass auf eine Innenwand des Reaktormantels ein Streckmetall aufgeschweißt ist und auf das Streckmetall Zement enthaltend Keramikpartikel aufgebracht ist.

Die Erfindung betrifft auch die Herstellung von Chlorsilanen in einem solchen Reaktor.

Gegenstand der Erfindung ist auch ein Verfahren zum Aufbringen eines Abrasionschutzes auf eine Stahlfläche eines Wirbelschichtreaktors, umfassend Aufschweißen eines Streckmetalls auf die Stahlfläche, Anrühren von Zement enthaltend Keramikpartikel mit Wasser, um eine Suspension zu erzeugen, Aufbringen des angerührten Zements auf die Stahlfläche, Trocknen und Abbinden des Zements für 10-30 Tage.

Vorzugweise handelt es sich um einen Wirbelschichtreaktor zur Umsetzung von gemahlenem, metallischem Silizium mit Chlorwasserstoff zu Chlorsilanen, nämlich zu Tetra- und Trichlorsilan und/oder gemahlenem, metallischem Silizium mit Tetrachlorsilan und Wasserstoff zu Trichlorsilan in einer Wirbelschicht.

Der Reaktor umfasst auf der Innenwand des Reaktormantels einen Abrasionschutz, der in Form von Mörtel/Zement aufgebracht ist. Es hat sich gezeigt, dass die Lebensdauer der Reaktorhülle dadurch um den Faktor 4 verlängert werden kann.

Abweichend vom Stand der Technik wird auf den Grundwerkstoff keine abrasionsbeständige Plattierung aufgetragen. Stattdessen wird die Reaktorinnenwand mit einem abrasionsbeständigen Putz ausgekleidet.

Der Mörtel ist viel beständiger gegen Abrasion als die Plattierungswerkstoffe. Zudem ist ein Austausch des Putzes viel leichter zu bewerkstelligen als der Wechsel einer Plattierung oder eine Reparatur des Grundwerkstoffs.

Schließlich liegen die Kosten für abrassionsbeständigen Mörtel weit unter den Kosten für abrasionsbeständige Plattierungen.

Der Reaktor besteht vorzugweise aus einem Reaktormantel, einer Zugabe für das gasförmige HCl und/oder H₂ und STC, einer Zugabe für metallisches Silizium, einem Abzug für hergestellte Chlorsilane.

Je nach Ausführung können interne Kühlelemente vorhanden sein.

Im Reaktor wird das gemahlene, metallische Silizium mittels HCl und/oder H₂ und STC fluidisiert.

Der Druck im Reaktor beträgt typischerweise 1-30 bar.

Die Temperatur beträgt vorzugweise 300-600 °C.

Das Material des Reaktormantels kann aus C-Stahl, Edelstahl oder höher legierten Stählen (z. B. Ni-Basis Werkstoffe wie Hastelloy, Incolloy) bestehen.

Auf die Innenwand des Reaktormantels ist ein Streckmetall aufgeschweißt.

Unter Streckmetall versteht man einen Werkstoff mit Öffnungen in der Oberfläche. Diese Öffnungen entstehen durch versetzte Schnitte ohne Materialverlust unter gleichzeitig streckender Verformung.
Üblich sind z.B. folgende Maschenformen: Rautenmasche, Langstegmasche, Sechseckmasche, Rundmasche, Quadratmasche, Sondermasche. Streckmetalle kommen u.a. als Putzträger im Bauwesen und bei der Verkleidung von Decken, Wänden und Fassaden zum Einsatz.

Als Ausgangsmaterial für das Streckmetall dient vorzugweise Stahl- oder Edelstahlblech in Stärken von 1 bis 5 mm.
Die Maschen sind vorzugweise quadratisch, rechteckig oder rautenförmig. Die Maschen weisen vorzugweise eine Seitenlänge von 10 bis 50 mm auf.

Der auf die. Innenwand des Reaktormantels bzw. das Streckmetall aufgebrachte Zement (CaO) umfasst Keramikpartikel.

Die Keramikpartikel bestehen aus einem Material ausgewählt aus der Gruppe bestehend aus Siliciumkarbid, Siliciumnitrid, Bornitrid, Zirkonoxid und Aluminiumnitrid.

Es können auch Keramikpartikel aus unterschiedlichen der zuvor genannten Materialien in Kombination verwendet werden.

Besonders bevorzugt handelt es sich bei den Keramikpartikeln um SiC-Partikel oder um Si₃N₄-Partikel.

In einer Ausführungsform umfasst der Zement einen oder mehrere Zuschlagsstoffe ausgewählt aus der Gruppe bestehend aus SiO₂, Al₂O₃, TiO₂, Cr6+ (z.B. CrO₃) und Fe₂O₃.

An der Reaktorinnenwand ist ein Streckmetall aufgeschweißt, auf das der Zement aufgebracht wird.

Der Zement wird mit etwas Wasser angerührt und als Suspension in den Reaktor auf das Streckmetall eingebracht.

Die Dicke der Zementschicht beträgt vorzugweise 5-50 mm.

Im zweiten Schritt wird der Zement bei Umgebungstemperatur getrocknet. Die Abbindedauer/Trocknungsdauer beträgt 10-30 Tage.

Durch den Einsatz eines Mörtels auf SiC-Basis kann der Reaktor bis zu 65 Wochen betrieben werden. Anschließend ist der Mörtel zu entfernen und durch einen neuen zu ersetzen. Somit kann das Reaktor-Mittelteil mindestens 12 Jahre eingesetzt werden.

Der Vorteil dieses Zements liegt in geringen Anschaffungskosten im Vergleich zu Plattierungen und Auskleidungen mit Ni-haltigen Werkstoffen, Wolframcarbid, SiC.

Die Einbringung in den Reaktor ist relativ einfach.

Außerdem ist die Verschleißfestigkeit relativ hoch.

Die bezüglich der vorstehend aufgeführten Ausführungsformen der erfindungsgemäßen Verfahren angegebenen Merkmale können entsprechend auf die erfindungsgemäße Vorrichtung übertragen werden. Umgekehrt können die bezüglich der vorstehend ausgeführten Ausführungsformen der erfindungsgemäßen Vorrichtung angegebenen Merkmale entsprechend auf die erfindungsgemäßen Verfahren übertragen werden. Diese und andere Merkmale der erfindungsgemäßen Ausführungsformen werden in den Ansprüchen erläutert. Die einzelnen Merkmale können entweder separat oder in Kombination als Ausführungsformen der Erfindung verwirklicht werden. Weiterhin können sie vorteilhafte Ausführungen beschreiben, die selbstständig schutzfähig sind.

Die vorstehende Offenbarung der Erfindung ermöglicht es dem Fachmann einerseits, die vorliegende Erfindung und die damit verbundenen Vorteile zu verstehen, und umfasst andererseits im Verständnis des Fachmanns auch offensichtliche Abänderungen und Modifikationen der beschriebenen Strukturen und Verfahren. Daher sollen alle derartigen Abänderungen und Modifikationen sowie Äquivalente durch den Schutzbereich der Ansprüche abgedeckt sein.

## Patentansprüche

1. Wirbelschichtreaktor zur Herstellung von Chlorsilanen, umfassend einen Reaktormantel aus Stahl, **dadurch gekennzeichnet, dass** auf eine Innenwand des Reaktormantels ein Streckmetall aufgeschweißt ist und auf das Streckmetall Zement enthaltend Keramikpartikel aufgebracht ist, wobei die Keramikpartikel aus einem Material ausgewählt aus der Gruppe bestehend aus Siliciumkarbid, Siliciumnitrid, Bornitrid, Zirkonoxid und Aluminiumnitrid bestehen.

2. Wirbelschichtreaktor nach Anspruch 1 wobei der Zement einen oder mehrere Zuschlagsstoffe ausgewählt aus der Gruppe bestehend aus SiO₂, Al₂O₃, TiO₂, Cr6+ und Fe₂O₃ umfasst.

3. Wirbelschichtreaktor nach einem der Ansprüche 1 bis 2, wobei der Zement eine Schichtdicke von 5-50 mm aufweist.

4. Verfahren zum Aufbringen eines Abrasionschutzes auf eine Stahlfläche eines Wirbelschichtreaktors, umfassend Aufschweißen eines Streckmetalls auf die Stahlfläche, Anrühren von Zement enthaltend Keramikpartikel mit Wasser, um eine Suspension zu erzeugen, Aufbringen des angerührten Zements auf die Stahlfläche, Trocknen und Abbinden des Zements für 10-30 Tage, wobei die Keramikpartikel aus einem Material ausgewählt aus der Gruppe bestehend aus Siliciumkarbid, Siliciumnitrid, Bornitrid, Zirkonoxid und Aluminiumnitrid bestehen.

5. Verfahren nach Anspruch 4 wobei der Zement einen oder mehrere Zuschlagsstoffe ausgewählt aus der Gruppe bestehend aus SiO₂, Al₂O₃, TiO₂, Cr6+ (z.B. CrO₃) und Fe₂O₃ umfasst.

6. Verfahren nach einem der Ansprüche 4 bis 5, wobei der Zement eine Schichtdicke von 5-50 mm aufweist.

7. Verfahren zur Herstellung von Chlorsilanen durch Umsetzung von gemahlenem, metallischem Silicium mit Chlorwasserstoff zu Tetra- und Trichlorsilan in einer Wirbelschicht oder durch Umsetzung von gemahlenem, metallischem Silicium mit Tetrachlorsilan und Wasserstoff zu Trichlorsilan in einer Wirbelschicht, wobei die Umsetzung in einem Wirbelschichtreaktor nach einem der Ansprüche 1 bis 3 erfolgt.

8. Verfahren nach Anspruch 7, wobei der Wirbelschichtreaktor bei einem Druck von 1-30 bar betrieben wird.

9. Verfahren nach Anspruch 7 oder nach Anspruch 8, wobei die Umsetzung bei einer Temperatur von 300-600 °C erfolgt.

## Claims

1. Fluidized bed reactor for preparing chlorosilanes which comprises a reactor shell made of steel, **characterized in that** an inner wall of the reactor shell has an expanded metal welded onto it and the expanded metal has cement comprising ceramic particles applied to it, wherein the ceramic particles are made of a material selected from the group consisting of silicon carbide, silicon nitride, boron nitride, zirconium oxide and aluminium nitride.

2. Fluidized bed reactor according to Claim 1, wherein the cement comprises one or more additives selected from the group consisting of SiO₂, Al₂O₃, TiO₂, Cr6+ and Fe₂O₃.

3. Fluidized bed reactor according to any of Claims 1 to 2, wherein the cement has a layer thickness of 5-50 mm.

4. Process for applying an abrasion protection to a steel surface of a fluidized bed reactor which comprises welding an expanded metal onto the steel surface, mixing cement comprising ceramic particles with water to produce a suspension, applying the mixed cement to the steel surface and drying and curing the cement for 10-30 days, wherein the ceramic particles are made of a material selected from the group consisting of silicon carbide, silicon nitride, boron nitride, zirconium oxide and aluminium nitride.

5. Process according to Claim 4, wherein the cement comprises one or more additives selected from the group consisting of SiO₂, Al₂O₃, TiO₂, Cr6+ (for example CrO₃) and Fe₂O₃.

6. Process according to any of Claims 4 to 5, wherein the cement has a layer thickness of 5-50 mm.

7. Process for preparing chlorosilanes by reacting ground, metallic silicon with hydrogen chloride to afford tetra- and trichlorosilane in a fluidized bed or by reacting ground, metallic silicon with tetrachlorosilane and hydrogen to afford trichlorosilane in a fluidized bed, wherein the reaction is effected in a fluidized bed reactor according to any of Claims 1 to 3.

8. Process according to Claim 7, wherein the fluidized bed reactor is operated at a pressure of 1-30 bar.

9. Process according to Claim 7 or according to Claim 8, wherein the reaction is effected at a temperature of 300-600°C.

## Revendications

1. Réacteur à lit fluidisé pour la fabrication de chlorosilanes, comprenant une enveloppe de réacteur en acier, **caractérisé en ce qu'**un métal déployé est soudé sur une paroi intérieure de l'enveloppe de réacteur et du ciment contenant des particules de céramique est appliqué sur le métal déployé, les particules de céramique étant constituées par un matériau choisi dans le groupe constitué par le carbure de silicium, le nitrure de silicium, le nitrure de bore, l'oxyde de zirconium et le nitrure d'aluminium.

2. Réacteur à lit fluidisé selon la revendication 1, dans lequel le ciment comprend un ou plusieurs additifs choisis dans le groupe constitué par SiO₂, Al₂O₃, TiO₂, Cr⁶⁺ et Fe₂O₃.

3. Réacteur à lit fluidisé selon l'une quelconque des revendications 1 à 2, dans lequel le ciment présente une épaisseur de couche de 5 à 50 mm.

4. Procédé d'application d'une protection contre l'abrasion sur une surface en acier d'un réacteur à lit fluidisé, comprenant le soudage d'un métal déployé sur la surface en acier, le mélange de ciment contenant des particules de céramique avec de l'eau afin de former une suspension, l'application du ciment mélangé sur la surface en acier, le séchage et la prise du ciment pendant 10 à 30 jours, les particules de céramique étant constituées par un matériau choisi dans le groupe constitué par le carbure de silicium, le nitrure de silicium, le nitrure de bore, l'oxyde de zirconium et le nitrure d'aluminium.

5. Procédé selon la revendication 4, dans lequel le ciment comprend un ou plusieurs additifs choisis dans le groupe constitué par SiO₂, Al₂O₃, TiO₂, Cr⁶⁺ (p. ex. CrO₃) et Fe₂O₃.

6. Procédé selon l'une quelconque des revendications 4 à 5, dans lequel le ciment présente une épaisseur de couche de 5 à 50 mm.

7. Procédé de fabrication de chlorosilanes par mise en réaction de silicium métallique broyé avec du chlorure d'hydrogène pour former du tétra- et du trichlorosilane dans un lit fluidisé ou par mise en réaction de silicium métallique broyé avec du tétrachlorosilane et de l'hydrogène pour former du trichlorosilane dans un lit fluidisé, la réaction ayant lieu dans un réacteur à lit fluidisé selon l'une quelconque des revendications 1 à 3.

8. Procédé selon la revendication 7, dans lequel le réacteur à lit fluidisé est exploité à une pression de 1 à 30 bar.

9. Procédé selon la revendication 7 ou la revendication 8, dans lequel la réaction a lieu à une température de 300 à 600 °C.
